(19) **Europäisches Patentamt / European Patent Office / Office européen des brevets**

(11) **EP 2 342 302 B1**

(12) **FASCICULE DE BREVET EUROPEEN**

(45) Date de publication et mention
de la délivrance du brevet:
**26.04.2017 Bulletin 2017/17**

(21) Numéro de dépôt: **09760545.5**

(22) Date de dépôt: **28.10.2009**

(51) Int Cl.:
**C09K 5/04** *(2006.01)*      **B60H 1/00** *(2006.01)*

(86) Numéro de dépôt international:
**PCT/FR2009/052075**

(87) Numéro de publication internationale:
**WO 2010/061084 (03.06.2010 Gazette 2010/22)**

(54) **PROCEDE DE CHAUFFAGE ET/OU CLIMATISATION D'UN VEHICULE**

FAHRZEUGHEIZ- UND/ODER KLIMATISIERUNGSVERFAHREN

VEHICLE HEATING AND/OR AIR CONDITIONING METHOD

(84) Etats contractants désignés:
**AT BE BG CH CY CZ DE DK EE ES FI GB GR HR HU IE IS IT LI LT LU LV MC MK MT NL NO PL PT RO SE SI SK SM TR**

(30) Priorité: **03.11.2008 FR 0857454**

(43) Date de publication de la demande:
**13.07.2011 Bulletin 2011/28**

(60) Demande divisionnaire:
**17162639.3**

(73) Titulaire: **Arkema France
92700 Colombes (FR)**

(72) Inventeur: **RACHED, Wissam
F-69630 CHAPONOST (FR)**

(74) Mandataire: **Dang, Doris
ARKEMA FRANCE
Département Propriété Industrielle
420, rue d'Estienne d'Orves
92705 Colombes Cedex (FR)**

(56) Documents cités:
**WO-A-2007/002625      WO-A-2008/027555
WO-A-2008/107623      WO-A1-2009/133859
FR-A- 2 905 633      US-A1- 2008 011 110**

• **"Extract (Title page and page 4) of M. Spatz and B. Minor, HFO-1234yf Low GWPRefrigerant Update, International Refrigeration and Air Conditioning Conference at Purdue, July 14-17, 2008", 14 July 2008 (2008-07-14)**

## Description

La présente invention concerne un procédé de chauffage et/ou de climatisation d'un habitacle de véhicule automobile.

Dans les véhicules automobiles, le moteur thermique comporte un circuit de circulation d'un fluide caloporteur qui est utilisé pour le refroidissement du moteur et également pour le chauffage de l'habitacle. A cet effet, le circuit comprend notamment une pompe et un aérotherme dans lequel circule un flux d'air qui récupère la chaleur emmagasinée par le fluide caloporteur afin de chauffer l'habitacle.

Par ailleurs, un système de climatisation destiné à refroidir l'habitacle d'un véhicule automobile comprend un évaporateur, un compresseur, un condenseur, un détendeur et un fluide susceptible de changer d'états (liquide/gaz) communément désigné fluide frigorigène. Le compresseur, directement entraîné par le moteur du véhicule à l'aide d'une courroie et d'une poulie, comprime le fluide frigorigène, le refoulant sous haute pression et à haute température vers le condenseur. Le condenseur, grâce à une ventilation forcée, provoque la condensation du gaz qui arrive à l'état gazeux à haute pression et haute température. Le condenseur liquéfie le gaz grâce à l'abaissement de température de l'air qui le traverse. L'évaporateur, est un échangeur thermique qui prélève des calories à l'air qui sera soufflé dans l'habitacle. Le détendeur permet de réguler le débit d'entrée du gaz dans la boucle via une modification de section de passage dépendant de la température et de la pression au niveau de l'évaporateur. Ainsi, l'air chaud venant de l'extérieur se refroidit en traversant l'évaporateur.

Le fluide frigorigène largement utilisé dans la climatisation automobile est le 1,1,1,2 -tetrafluoroéthane (HFC-134a).

Le document FR 2905633 décrit une boucle de climatisation d'un véhicule dont le fluide réfrigérant est à base d'un mélange de 1,1,1,2-tétrafluoropropène et de trifluoroiodométhane.

Le document WO 2007/002625 décrit des compositions à base de fluoroalcènes en C3-C6 dans diverses applications, et notamment dans des applications de transfert de chaleur.

Le document WO 2008/027555 décrit un procédé de transport d'une composition de fluide de transfert de chaleur dans un système de réfrigération ou de climatisation, dans lequel le fluide de transfert de chaleur circule dans un ou plusieurs tuyaux du système. Le 2,3,3,3-tétrafluoropropène est cité comme composé pouvant faire partie de la composition de fluide de transfert de chaleur.

Le document WO 2009/133859 décrit un circuit de réfrigération, comprenant du 2,3,3,3-tétrafluoropropène en tant que réfrigérant, en association avec un agent de capture de radicaux ou un inhibiteur de polymérisation.

Le document WO 2008/107623 décrit un système de gestion d'énergie d'un véhicule automobile comprenant une boucle frigorifique réversible avec circulation d'un fluide frigorigène, des moyens d'inversion du cycle de fonctionnement de la boucle frigorifique mobiles entre une position en mode frigorifique et une position en mode pompe à chaleur, au moins une première source apte à récupérer l'énergie du fluide frigorigène, et au moins une seconde source apte à évaporer le fluide frigorigène suite à la détente dudit fluide de l'état liquide à l'état diphasique, les moyens d'inversion étant aptes à permettre un écoulement du fluide frigorigène de la première source de récupération en direction d'au moins une source d'évaporation, lorsqu'ils sont dans une position identique à celle correspondant au mode pompe à chaleur.

Toutefois, avec le HFC-134a comme fluide frigorigène dans le système tel que décrit le document WO 2008/107623, lorsque la température extérieure est autour de -15°C, une dépression commence à se former à l'évaporateur même avant que le compresseur ne soit lancé. Cette dépression qui conduit à une infiltration de l'air dans le système favorise les phénomènes de corrosion et la dégradation des composants tels que compresseur, échangeur et détendeur.

La présente invention a pour objectif d'empêcher l'air de pénétrer dans l'évaporateur de la boucle frigorifique au démarrage du compresseur et/ou d'améliorer le rendement de la boucle frigorifique.

La présente invention a donc pour objet un procédé de chauffage et/ou de climatisation d'un habitacle de véhicule automobile à l'aide d'une boucle frigorifique réversible, dans laquelle circule un fluide frigorigène, comprenant un premier échangeur de chaleur, un détendeur, un second échangeur de chaleur, un compresseur et des moyens d'inversion du sens de circulation du fluide frigorigène caractérisé en ce que le fluide frigorigène comprend le 2,3,3,3-tetrafluoropropène.

Les moyens d'inversion du sens de la circulation du fluide frigorigène dans la boucle frigorifique de manière à inverser le cycle de fonctionnement de celle-ci peuvent être constitués par une vanne à quatre voies.

Outre le 2,3,3,3-tetrafluoropropène, le fluide frigorigène peut comprendre des hydrofluorocarbures saturés ou insaturés.

Comme hydrofluorocarbures saturés, on peut citer notamment le difluorométhane, le difluoroéthane, le tetrafluoroéthane et le pentafluoroéthane.

Comme hydrofluorocarbures insaturés, on peut citer notamment le 1,3,3,3-tétrafluoropropène, les trifluoropropènes tel que le 3,3,3-trifluoropropène, et les monochlorotrifluoropropènes tel que le 1-chloro,3,3,3-trifluoropropène et le 2-chloro,3,3,3-trifluoropropène.

Les compositions suivantes peuvent convenir comme fluide frigorigène dans le procédé selon la présente invention :

- 80 à 98 % en poids de 2,3,3,3-tetrafluoropropène et 2 à 20 % en poids de difluorométhane,
- 40 à 95 % en poids de 2,3,3,3-tetrafluoropropène et 5 à 60 % en poids de 1,1,1,2 -tetrafluoroéthane,
- 90 à 98 % en poids de 2,3,3,3-tetrafluoropropène et 2 à 10 % en poids de difluoroéthane,
- 90 à 98% en poids de 2,3,3,3-tetrafluoropropène et 2 à 10 % en poids de pentafluoroéthane.

Les compositions suivantes conviennent tout particulièrement comme fluide frigorigène :

- 90 à 98 % en poids de 2,3,3,3-tetrafluoropropène et 2 à 10 % en poids de difluorométhane,
- 90 à 95 % en poids de 2,3,3,3-tetrafluoropropène et 5 à 10 % en poids de 1,1,1,2 -tetrafluoroéthane,
- 95 à 98 % en poids de 2,3,3,3-tetrafluoropropène et 2 à 5 % en poids de difluoroéthane,
- 95 à 98 % en poids de 2,3,3,3-tetrafluoropropène et 2 à 5 % en poids de pentafluoroéthane.

Une composition contenant essentiellement du 2,3,3,3-tetrafluoropropène est particulièrement préférée.

Le fluide frigorigène peut aussi comprendre des stabilisants du 2,3,3,3-tetrafluoropropène. A titre d'exemples de stabilisant, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Suivant le mode de fonctionnement de la boucle, frigorifique ou pompe à chaleur, le premier échangeur de chaleur peut jouer le rôle d'évaporateur ou de récupérateur d'énergie. Il en est de même pour le second échangeur de chaleur. En mode frigorifique, le second échangeur permet le refroidissement du flux d'air destiné à être pulsé à l'intérieur de l'habitacle du véhicule automobile. En mode pompe à chaleur, le second échangeur permet de réchauffer le flux d'air destiné à l'habitacle du véhicule automobile.

Le premier et second échangeurs de chaleur sont du type air / fluide frigorigène.

Dans le procédé selon la présente invention la boucle frigorifique peut être couplée thermiquement, à travers les échangeurs de chaleur, avec le circuit de refroidissement du moteur. Ainsi, la boucle peut comprendre au moins un échangeur de chaleur traversé à la fois par le fluide frigorigène et par un fluide caloporteur, notamment l'air ou l'eau du circuit de refroidissement du moteur thermique.

Selon une variante du procédé, le premier échangeur de chaleur est traversé à la fois par le fluide frigorigène et par des gaz d'échappement issus du moteur thermique du véhicule automobile ; ces derniers peuvent communiquer thermiquement avec un circuit de fluide caloporteur.

La boucle frigorifique dans le procédé, selon la présente invention, peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile.

Le procédé selon la présente invention convient tout particulièrement lorsque la température extérieure est inférieure à -15°C, de préférence inférieure à -20°C.

Le procédé selon la présente invention convient également aux vehicules automobiles hybrides qui sont conçus pour fonctionner en alternance sur moteur thermique et moteur électrique. Il permet de gérer au mieux les apports en énergie selon les conditions climatiques (chaud ou froid) tant pour l'habitacle que pour la batterie et notamment d'apporter du chaud ou du froid à la batterie à travers un circuit de fluide caloporteur.

La boucle frigorifique réversible, dans laquelle circule le fluide frigorigène comprenant du 2,3,3,3-tetrafluoropropène, installée dans des véhicules automobiles convient particulièrement pour la récupération d'énergie du moteur thermique et/ou de la batterie électrique utile pour le chauffage de l'habitacle et le moteur thermique pendant une phase de démarrage à froid. Cette boucle frigorifique réversible, lorsqu'elle comprend une pompe, peut fonctionner en mode Rankine (c'est-à-dire le compresseur fonctionne comme une turbine) pour valoriser l'énergie thermique produite par le moteur thermique et véhiculée ensuite par le fluide frigorigène, après transfert thermique.

L'invention a également pour objet un dispositif comprenant la boucle frigorifique tel que décrit précédemment.

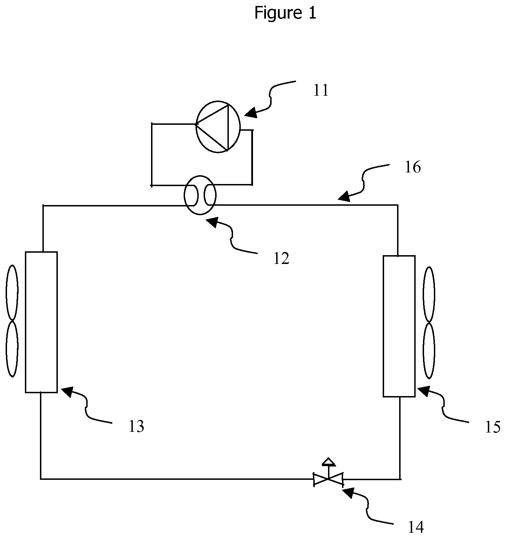

Selon un premier mode de réalisation de l'invention, représenté schématiquement par la Figure 1, la boucle frigorifique (16) comprend un premier échangeur de chaleur (13), un détendeur (14), un second échangeur de chaleur (15), un compresseur (11) et une vanne à quatre voies (12). Le premier et second échangeurs de chaleur sont du type air/ fluide frigorigène. Le premier échangeur de chaleur (13) est traversé par le fluide frigorigène de la boucle (16) et par le flux d'air amené par un ventilateur. Une partie ou la totalité de ce même flux d'air, traverse aussi un échangeur de chaleur du circuit de refroidissement du moteur (non représenté sur la figure). De la même manière, le second échangeur (15) est traversé par un flux d'air amené par un ventilateur. Une partie ou la totalité de ce flux d'air traverse aussi un autre échangeur de chaleur du circuit de refroidissement du moteur (non représenté sur la figure). Le sens de circulation de l'air est fonction du mode de fonctionnement de la boucle (16) et des besoins du moteur thermique. Ainsi, quand le moteur thermique est en régime stationnaire et la boucle (16) en mode pompe à chaleur, l'air peut être chauffé par l'échangeur du circuit de refroidissement du moteur thermique puis, soufflé sur l'échangeur (13) pour accélérer l'évaporation du fluide de la boucle (16) et donc améliorer les performances de cette boucle.

Les échangeurs du circuit de refroidissement peuvent être activés à l'aide des vannes suivant les besoins du moteur thermique (chauffage de l'air entrant dans le moteur ou valorisation d'énergie produite par ce moteur).

En mode frigorifique, le fluide frigorigène mis en mouvement par le compresseur (11) traverse, via la vanne (12), l'échangeur (13) jouant le rôle de condenseur (c'est-à-dire dégage des calories vers l'extérieur), ensuite le détendeur (14), puis l'échangeur (15) jouant le rôle d'évaporateur permettant ainsi le refroidissement du flux d'air destiné à être pulsé à l'intérieur de l'habitacle du véhicule automobile.

En mode pompe à chaleur, le sens d'écoulement du fluide frigorigène est inversé par l'intermédiaire de la vanne (12). L'échangeur de chaleur (15) joue le rôle de condenseur tandis que l'échangeur (13) joue le rôle d'évaporateur. L'échangeur de chaleur (15) permet alors de réchauffer le flux d'air destiné à l'habitacle du véhicule automobile.

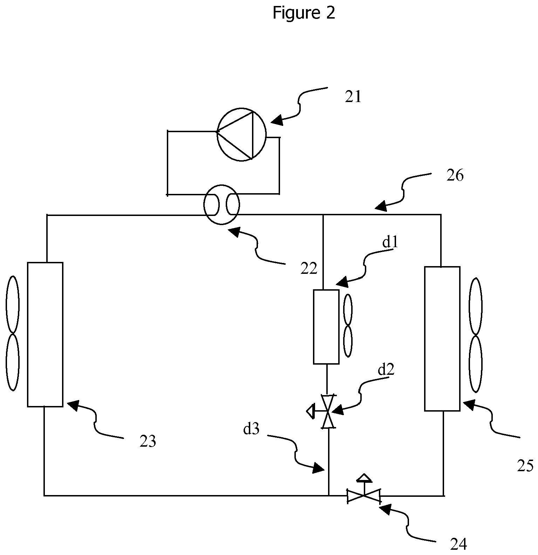

Selon un deuxième mode de réalisation de l'invention, représenté schématiquement par la Figure 2, la boucle frigorifique (26) comprend un premier échangeur de chaleur (23), un détendeur (24), un second échangeur de chaleur (25), un compresseur (21), une vanne à quatre voies (22) et une branche de dérivation (d3) montée d'une part à la sortie de l'échangeur (23), et d'autre part à la sortie de l'échangeur (25), en considérant la circulation du fluide en mode frigorifique. Cette branche comprend un échangeur de chaleur (d1) traversé par un flux d'air ou un flux de gaz d'échappement destiné à être admis à l'intérieur du moteur thermique et un détendeur (d2). Le premier et second échangeurs (23 et 25) de chaleur sont du type air/ fluide frigorigène. Le premier échangeur de chaleur (23) est traversé par le fluide frigorigène de la boucle (26) et par le flux d'air amené par un ventilateur. Une partie ou la totalité de ce même flux d'air, traverse aussi un échangeur de chaleur du circuit de refroidissement du moteur (non représenté sur la figure). De la même manière, le second échangeur (25) est traversé par un flux d'air amené par un ventilateur. Une partie ou la totalité de ce flux d'air traverse aussi un autre échangeur de chaleur du circuit de refroidissement du moteur (non représenté sur la figure). Le sens de circulation de l'air est fonction du mode de fonctionnement de la boucle (26) et des besoins du moteur thermique. A titre d'exemple, quand le moteur thermique est en régime stationnaire et la boucle (26) en mode pompe à chaleur, l'air peut être chauffé par l'échangeur du circuit de refroidissement du moteur thermique puis, soufflé sur l'échangeur (23) pour accélérer l'évaporation du fluide de la boucle (26) et améliorer les performances de cette boucle.

Les échangeurs du circuit de refroidissement peuvent être activés à l'aide des vannes suivant les besoins du moteur thermique (chauffage de l'air entrant dans le moteur ou valorisation d'énergie produite par ce moteur).

L'échangeur de chaleur (d1) peut aussi être activé suivant les besoins énergétiques que ce soit en mode frigorifique ou en mode pompe à chaleur. Des vannes d'arrêt peuvent être installées sur la branche (d3) pour activer ou désactiver cette branche.

L'échangeur (d1) est traversé par un flux d'air amené par un ventilateur. Ce même flux d'air peut traverser un autre échangeur de chaleur du circuit de refroidissement du moteur et aussi d'autres échangeurs placés sur le circuit des gaz d'échappement, sur l'arrivée d'air au moteur ou sur la batterie dans les voitures hybrides.

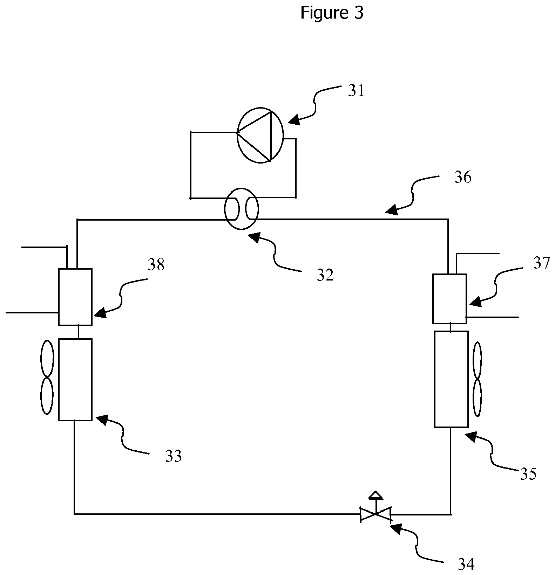

Selon un troisième mode de réalisation de l'invention, représenté schématiquement par la Figure 3, la boucle frigorifique (36) comprend un premier échangeur de chaleur (33), un détendeur (34), un second échangeur de chaleur (35), un compresseur (31) et une vanne à quatre voies (32). Le premier et second échangeurs (33 et 35) de chaleur sont du type air/ fluide frigorigène. Le fonctionnement des échangeurs (33 et 35) est identique au premier mode de réalisation présenté à la Figure 1. Deux échangeurs fluide/liquide (38 et 37) sont installés à la fois sur le circuit de la boucle frigorifique (36) et sur le circuit de refroidissement du moteur thermique ou sur un circuit secondaire d'eau glycolée. L'installation des échangeurs fluide/liquide sans passer par un fluide intermédiaire gazeux (air) contribue à l'amélioration des échanges thermiques par rapport aux échangeurs air / fluide.

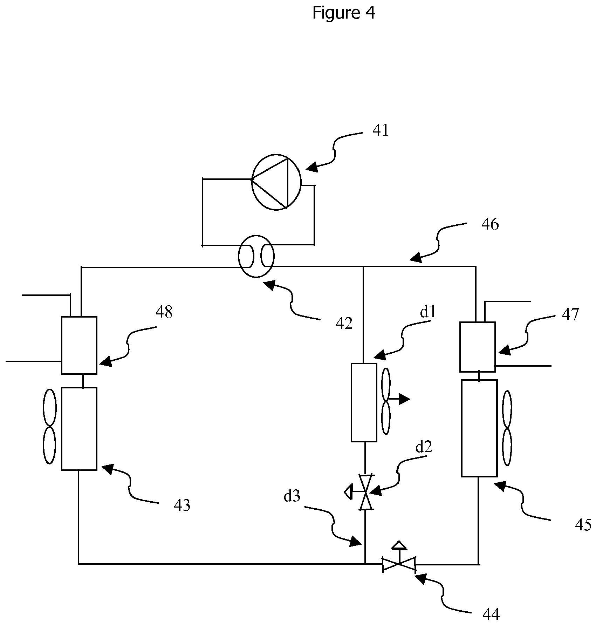

Selon un quatrième mode de réalisation de l'invention, représenté schématiquement par la Figure 4, la boucle frigorifique (46) comprend une première série échangeur de chaleur (43 et 48), un détendeur (44), une seconde série échangeur de chaleur (45 et 47), un compresseur (41) et une vanne à quatre voies (42). Une branche de dérivation (d1) montée d'une part à la sortie de l'échangeur (43), et d'autre part à la sortie de l'échangeur (47), en considérant la circulation du fluide en mode frigorifique. Cette branche comprend un échangeur de chaleur (d1) traversé par un flux d'air ou un flux de gaz d'échappement destiné à être admis à l'intérieur du moteur thermique et un détendeur (d2). Le fonctionnement de cette branche est identique au second mode de réalisation présenté à la Figure 2.

Les échangeurs (43 et 45) de chaleur sont du type air/ fluide frigorigène et les échangeurs (48 et 47) sont du type liquide/fluide frigorigène. Le fonctionnement de ces échangeurs est identique au troisième mode de réalisation présenté à la Figure 3.

PARTIE EXPERIMENTALE

Des simulations des performances du fluide frigorigène dans les conditions de fonctionnement de pompe à chaleur dans les véhicules et en fixant la température au condenseur à 30°C sont données ci-dessous.

Température de condensation : +30°C (T cond)
Température entrée compresseur : +5°C (Te comp)

Evap P : est la pression à l'évaporateur
Cond P : est la pression au condenseur
T sortie comp: est la température à la sortie compresseur
Taux : le taux de compression est le rapport de la haute pression sur la basse pression. COP : coefficient de performance et est défini, lorsqu'il s'agit d'une pompe à chaleur comme étant la puissance chaude utile fournie par le système sur la puissance apportée ou consommée par le système.
CAP : capacité volumétrique, c'est la capacité calorifique par unité de volume (kJ/m$^3$) % CAP ou COP c'est le rapport de la valeur du CAP ou COP du 2,3,3,3-tetrafluoropropène (HFO-1234yf) par rapport à ceux du HFC-134a.
Rendement isentropique du compresseur : c'est le rapport entre l'énergie réelle transmise au fluide et l'énergie isentropique.

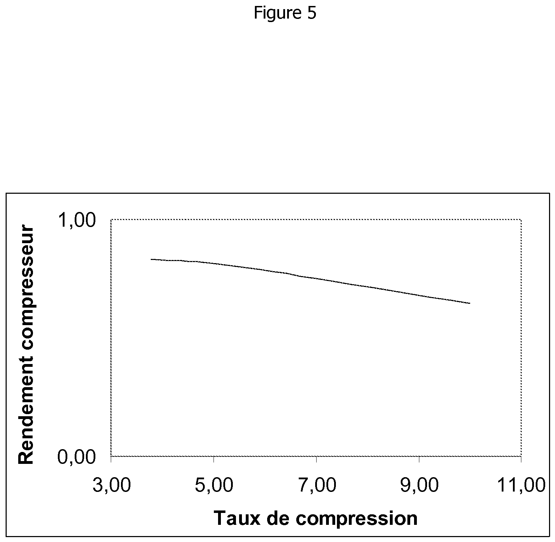

Le rendement isentropique du compresseur est exprimé en fonction du taux de compression. (Figure 5)

$$\eta = a + b\tau + c \cdot \tau^2 + d \cdot \tau^3 + e \cdot \tau^4$$

$\eta$ :       *rendement isentropique*
$\tau$ :       *taux de compression*
*a, b, c et e* :   *constantes*

Les valeurs des constantes a, b, c, d et e sont déterminées suivant une courbe typique de rendement. D'après le "Handbook of air conditioning and réfrigération, Shan k. Wang"
Pour le HFC-134a, le COP et la pression à l'évaporateur diminuent avec la température d'évaporation.

| | Tempévap (°C) | evap P (kpa) | cond P (kPa) | Taux (p/p) | T sortie comp | CAP (KJ/m3) | Rend isentrop | COPc |
|---|---|---|---|---|---|---|---|---|
| HFC-134a | -35,00 | 66,70 | 768,33 | 11,52 | 82,61 | 679,70 | 0,62 | 2,32 |
| | -30,00 | 84,92 | 768,33 | 9,05 | 75,31 | 841,71 | 0,68 | 2,82 |
| | -25,00 | 106,89 | 768,33 | 7,19 | 68,35 | 1032,37 | 0,75 | 3,39 |
| | -20,00 | 133,14 | 768,33 | 5,77 | 61,72 | 1255,21 | 0,79 | 4,01 |

Pour le HFO-1234yf dans les mêmes conditions on trouve :

| | Temp évap (°C) | evap P (kpa) | cond P (kPa) | Taux (p/p) | T sortie comp | CAP (KJ/m3) | Rend isentrop | COPc | %cap | %COP |
|---|---|---|---|---|---|---|---|---|---|---|
| HFO-1234yf | -35,00 | 77,05 | 772,09 | 10,02 | 70,15 | 707,00 | 0,66 | 2,43 | 104 | 104 |
| | -30,00 | 97,01 | 772,09 | 7,96 | 64,10 | 865,60 | 0,72 | 2,91 | 103 | 103 |
| | -25,00 | 120,73 | 772,09 | 6,40 | 58,36 | 1049,51 | 0,77 | 3,45 | 102 | 102 |
| | -20,00 | 148,64 | 772,09 | 5,19 | 52,88 | 1261,40 | 0,81 | 4,01 | 100 | 100 |

Le HFO-1234yf montre une pression à l'évaporateur supérieure à la pression du HFC-134a ce qui aide à limiter l'infiltration d'air à l'intérieur du système quand ce système fonctionne à très basse température.

Pour un même compresseur, à très basse température, le HFO-1234yf est plus performant que le HFC-134a. En mode chauffage et quand la température de condensation est de 30°C, le HFO-1234yf montre un meilleur rendement au compresseur, un meilleur COP et une meilleure capacité.

## Revendications

1. Procédé de chauffage et/ou de climatisation d'un habitacle de véhicule automobile à l'aide d'une boucle frigorifique réversible, dans laquelle circule un fluide frigorigène, comprenant un premier échangeur de chaleur, un détendeur, un second échangeur de chaleur, un compresseur et des moyens d'inversion du sens de circulation du fluide frigorigène **caractérisé en ce que** le fluide frigorigène comprend le 2,3,3,3-tétrafluoropropène.

2. Procédé selon la revendication 1 **caractérisé en ce que** le fluide frigorigène peut comprendre des hydrofluorocarbures saturés et insaturés.

3. Procédé selon la revendication 1 ou 2 **caractérisé en ce que** le premier et second échangeurs sont du type air / fluide frigorigène.

4. Procédé selon l'une quelconque des revendications 1 à 3 **caractérisé en ce que** la boucle frigorifique est couplée thermiquement avec le circuit de refroidissement du moteur thermique.

5. Procédé selon l'une quelconque des revendications 1 à 4 **caractérisé en ce que** le premier échangeur de chaleur est traversé à la fois par le fluide frigorigène et par des gaz d'échappement issus du moteur thermique du véhicule automobile.

6. Procédé selon l'une quelconque des revendications 1 à 5 **caractérisé en ce que** la boucle peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile.

7. Procédé selon l'une quelconque des revendications 1 à 6 **caractérisé en ce que** la boucle frigorifique est installée dans les véhicules pour la récupération d'énergie du moteur thermique et/ou de la batterie électrique.

8. Procédé selon l'une quelconque des revendications 1 à 7, qui est un procédé de chauffage et de climatisation.

9. Procédé selon l'une quelconque des revendications 1 à 7, qui est un procédé de chauffage.

10. Dispositif comprenant une boucle frigorifique réversible dans laquelle circule un fluide frigorigène, comprenant un premier échangeur de chaleur, un détendeur, un second échangeur de chaleur, un compresseur et des moyens d'inversion du sens de circulation du fluide frigorigène **caractérisé en ce que** le fluide frigorigène comprend le 2,3,3,3-tétrafluoropropène.

11. Dispositif selon la revendication 10, **caractérisé en ce que** le fluide frigorigène peut comprendre des hydrofluorocarbures saturés et insaturés.

12. Dispositif selon la revendication 10 ou 11, **caractérisé en ce que** le premier et second échangeurs sont du type air / fluide frigorigène.

13. Dispositif selon l'une quelconque des revendications 10 à 12, **caractérisé en ce que** la boucle frigorifique est couplée thermiquement avec le circuit de refroidissement d'un moteur thermique.

14. Dispositif selon l'une quelconque des revendications 10 à 13, **caractérisé en ce que** le premier échangeur de chaleur est traversé à la fois par le fluide frigorigène et par des gaz d'échappement issus d'un moteur thermique de véhicule automobile.

15. Dispositif selon l'une quelconque des revendications 10 à 14, **caractérisé en ce que** la boucle peut comprendre en dérivation au moins un échangeur de chaleur communiquant thermiquement avec un flux d'air, destiné à être admis à l'intérieur d'un moteur thermique de véhicule automobile, ou avec des gaz d'échappement issus d'un moteur thermique automobile.

16. Dispositif selon l'une quelconque des revendications 10 à 15, **caractérisé en ce que** la boucle frigorifique est installée dans les véhicules pour la récupération d'énergie du moteur thermique et/ou de la batterie électrique.


**Patentansprüche**

1. Verfahren zum Heizen und/oder Klimatisieren eines Fahrgastraums eines Kraftfahrzeugs mit Hilfe einer reversiblen Kühlschleife, in der ein Kühlfluid zirkuliert, umfassend einen ersten Wärmetauscher, einen Druckminderer, einen zweiten Wärmetauscher, einen Kompressor und Mittel zur Umkehr der Zirkulationsrichtung des Kühlfluids, **dadurch gekennzeichnet, dass** das Kühlfluid das 2,3,3,3-Tetrafluorpropen umfasst.

2. Verfahren nach Anspruch 1, **dadurch gekennzeichnet, dass** das Kühlfluid gesättigte und ungesättigte Fluorkohlenwasserstoffe umfassen kann.

3. Verfahren nach Anspruch 1 oder 2, **dadurch gekennzeichnet, dass** der erste und der zweite Wärmetauscher vom Typ Luft/Kühlfluid sind.

4. Verfahren nach einem der Ansprüche 1 bis 3, **dadurch gekennzeichnet, dass** die Kühlschleife thermisch mit dem Kühlkreislauf des Verbrennungsmotors gekoppelt ist.

5. Verfahren nach einem der Ansprüche 1 bis 4, **dadurch gekennzeichnet, dass** der erste Wärmetauscher sowohl von dem Kühlfluid als auch von Auspuffgasen, die vom Verbrennungsmotor des Kraftfahrzeugs stammen, durchquert wird.

6. Verfahren nach einem der Ansprüche 1 bis 5, **dadurch gekennzeichnet, dass** die Schleife in Abzweigung mindestens einen Wärmetauscher umfassen kann, der thermisch mit einem Luftstrom, der dazu bestimmt ist, in das Innere des Verbrennungsmotors des Kraftfahrzeugs eingelassen zu werden, oder mit Auspuffgasen, die von dem Fahrzeugverbrennungsmotor stammen, in Verbindung steht.

7. Verfahren nach einem der Ansprüche 1 bis 6, **dadurch gekennzeichnet, dass** die Kühlschleife in den Fahrzeugen zur Energierückgewinnung des Verbrennungsmotors und/oder der elektrischen Batterie installiert ist.

8. Verfahren nach einem der Ansprüche 1 bis 7, welches ein Heiz- und Klimatisierungsverfahren ist.

9. Verfahren nach einem der Ansprüche 1 bis 7, welches ein Heizverfahren ist.

10. Vorrichtung, umfassend eine reversible Kühlschleife, in der ein Kühlfluid zirkuliert, umfassend einen ersten Wärmetauscher, einen Druckminderer, einen zweiten Wärmetauscher, einen Kompressor und Mittel zur Umkehr der Zirkulationsrichtung des Kühlfluids, **dadurch gekennzeichnet, dass** das Kühlfluid das 2,3,3,3-Tetrafluorpropen umfasst.

11. Vorrichtung nach Anspruch 10, **dadurch gekennzeichnet, dass** das Kühlfluid gesättigte und ungesättigte Fluorkohlenwasserstoffe umfassen kann.

12. Vorrichtung nach Anspruch 10 oder 11, **dadurch gekennzeichnet, dass** der erste und der zweite Wärmetauscher vom Typ Luft/Kühlfluid sind.

13. Vorrichtung nach einem der Ansprüche 10 bis 12, **dadurch gekennzeichnet, dass** die Kühlschleife thermisch mit dem Kühlkreislauf eines Verbrennungsmotors gekoppelt ist.

14. Vorrichtung nach einem der Ansprüche 10 bis 13, **dadurch gekennzeichnet, dass** der erste Wärmetauscher sowohl von dem Kühlfluid als auch von Auspuffgasen, die von einem Verbrennungsmotor des Kraftfahrzeugs stammen, durchquert wird.

**15.** Vorrichtung nach einem der Ansprüche 10 bis 14, **dadurch gekennzeichnet, dass** die Schleife in Abzweigung mindestens einen Wärmetauscher umfassen kann, der thermisch mit einem Luftstrom, der dazu bestimmt ist, in das Innere eines Verbrennungsmotors des Kraftfahrzeugs eingelassen zu werden, oder mit Auspuffgasen, die von einem Fahrzeugverbrennungsmotor stammen, in Verbindung steht.

**16.** Vorrichtung nach einem der Ansprüche 10 bis 15, **dadurch gekennzeichnet, dass** die Kühlschleife in den Fahrzeugen zur Energierückgewinnung des Verbrennungsmotors und/oder der elektrischen Batterie installiert ist.

**Claims**

**1.** Heating and/or air conditioning method for a passenger compartment of an automobile, using a reversible cooling loop, in which a coolant flows, comprising a first heat exchanger, an expansion valve, a second heat exchanger, a compressor and means for reversing the direction of flow of the coolant, **characterized in that** the coolant comprises 2,3,3,3-tetrafluoropropene.

**2.** Method according to Claim 1, **characterized in that** the coolant can comprise saturated and unsaturated hydrofluorocarbons.

**3.** Method according to Claim 1 or 2, **characterized in that** the first and second exchangers are of the air/coolant type.

**4.** Method according to any one of Claims 1 to 3, **characterized in that** the cooling loop is thermally coupled to the cooling circuit of the thermal engine.

**5.** Method according to any one of Claims 1 to 4, **characterized in that** both the coolant and the exhaust gases from the thermal engine of the automobile flow through the first heat exchanger simultaneously.

**6.** Method according to any one of Claims 1 to 5, **characterized in that** the cooling loop can include a branch having at least one heat exchanger communicating thermally with a flow of air which is to be admitted into the thermal engine of the automobile, or with exhaust gases emitted by the thermal engine of the automobile.

**7.** Method according to any one of Claims 1 to 6, **characterized in that** the cooling loop is installed in vehicles for recovering energy from the thermal engine and/or from the electrical battery.

**8.** Method according to any one of Claims 1 to 7, which is a heating and air conditioning method.

**9.** Method according to any one of Claims 1 to 7, which is a heating method.

**10.** Device comprising a reversible cooling loop in which a coolant flows, comprising a first heat exchanger, an expansion valve, a second heat exchanger, a compressor and means for reversing the direction of flow of the coolant, **characterized in that** the coolant comprises 2,3,3,3-tetrafluoropropene.

**11.** Device according to Claim 10, **characterized in that** the coolant can comprise saturated and unsaturated hydrofluorocarbons.

**12.** Device according to Claim 10 or 11, **characterized in that** the first and second exchangers are of the air/coolant type.

**13.** Device according to any one of Claims 10 to 12, **characterized in that** the cooling loop is thermally coupled to the cooling circuit of a thermal engine.

**14.** Device according to any one of Claims 10 to 13, **characterized in that** both the coolant and the exhaust gases from an automobile thermal engine flow through the first heat exchanger simultaneously.

**15.** Device according to any one of Claims 10 to 14, **characterized in that** the cooling loop can include a branch having at least one heat exchanger communicating thermally with a flow of air which is to be admitted into an automobile thermal engine, or with exhaust gases emitted by an automobile thermal engine.

**16.** Device according to any one of Claims 10 to 15, **characterized in that** the cooling loop is installed in vehicles for recovering energy from the thermal engine and/or from the electrical battery.

Figure 1

Figure 2

Figure 3

Figure 4

Figure 5

**EP 2 342 302 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2905633
- WO 2007002625 A
- WO 2008027555 A
- WO 2009133859 A
- WO 2008107623 A